# EUROPEAN PATENT SPECIFICATION

(11) **EP 3 821 449 B1**
(45) Date of publication and mention of the grant of the patent: **28.01.2026**
(21) Application number: 19749810.8
(22) Date of filing: 08.07.2019
(51) Int. Cl.: H01B 9/00, H01B 13/14, H01B 7/18

(54) **A WATER-COOLED ELECTRIC CABLE AND RELATIVE MANUFACTURING METHOD**
WASSERGEKÜHLTES ELEKTRISCHES KABEL UND VERFAHREN ZU SEINER HERSTELLUNG
CÂBLE ÉLECTRIQUE REFROIDI À L'EAU ET PROCÉDÉ DE FABRICATION ASSOCIÉ

(30) Priority: 10.07.2018 IT 201800007053
(43) Date of publication of application: 19.05.2021
(73) Proprietor: BRAR ELETTROMECCANICA S.p.A., 46020 Pegognaga (MN) (IT)
(72) Inventor: ARIOLI, Andrea, 46029 SUZZARA (MN) (IT)
(74) Representative: Montebelli, Marco
(86) International application number: PCT/IT2019/050161
(87) International publication number: WO 2020/012515

(56) References cited:
- DE-A1- 2 357 674
- FR-A1- 2 559 613
- GB-A- 821 281
- RU-U1- 56 060
- US-A- 3 265 803
- US-A- 4 472 598

## Description

### Technical Field

The invention relates to a water-cooled electric cable and the process for its making.

### Background Art

Water-cooled copper cables are widely used in sectors where such cables must transfer particularly high currents and are therefore subject to considerable Joule heating. Each cable consists of a plurality of copper wire ropes, which are wrapped on a hollow support tube and joined at their ends to copper terminals. The cable also has a rubber covering, which is secured to the terminals by nonmagnetic stainless-steel bands. Water runs along the entire length of the cable, entering from one terminal and exiting through the opposite one, and allows the cable to work with high current densities. The abovementioned cables have an average lifespan of up to around 2-4 years.

In particular, this type of cable is also used in electric arc furnaces intended for producing steel from scrap. In these furnaces, the scrap is melted by an electric arc that is bounced between three graphite electrodes arranged circumferentially at 120°. The transformers used work with very high power, in the order of hundreds of MVA, due to working voltages of around 1000 volts and electrode currents which can reach more than 100KA: to transfer such a high current, 2 to 4 cables are assembled in a parallel format for each of the three phases, making a total of 6 to 12. The cables are the only flexible parts of the secondary electric system and enable the movement of the electrodes, which are lowered inside the melting furnace as the scrap decreases in volume by melting and are then shifted to allow the vault of the furnace to be opened for a new load of scrap iron to be inserted.

Two to three loads of scrap are melted for each casting, with a modern furnace enabling more than 35 castings to be carried out per day: therefore, the furnace vault can be opened even more than a hundred times per day. In this step, the heat radiated from the furnace towards the tubes reaches temperatures of between 200°C and 400°C.

During operation, the high electric currents generate strong electromagnetic fields which cause high-intensity forces, also known as "Lorentz force", which vary over time. These forces create mechanical stress on the cables, which behave in various ways: the wires of each rope gravitate towards the rope axis, creating abrasions between the wires; the ropes inside the cable gravitate towards the cable axis, creating abrasion between the ropes themselves; cables of the same phase gravitate towards the axis of that phase, while cables of the other phases are repelled, leading to strong cable oscillations, flapping and rubbing, which cause the early wearing of the cable covers and heavy stress on the internal ropes and their constituent wires.

These cables can be made in several ways: the most common design are "rope lay" designs, formed by a certain number of parallel copper ropes with an identical cross-section and arranged annularly on a flexible support, generally a rubber tube; the number of ropes can vary from 4 to 16 depending on the overall cross-section of the cable.

To address the drawbacks listed above, and as described in document US3265803, a pre-pierced sheath is fitted onto each of the ropes to limit wearing caused by friction with neighbouring ropes. This sheath is normally fitted onto only half of the copper ropes and does not preclude contact with cooling water, thus guaranteeing good heat exchange.

Alternatively, the sheath is made to be directly pierced during an extrusion process as described in document FR2559613, in which more complex and costly instrumentation must be used to achieve a non-uniform coverage, which can give rise to problems when used in the presence of intense electromagnetic fields.

Terminals joined to the ropes by braze welding or mechanical pressing are applied to the ends of the "rope lay" cables.

Then, an external rubber tube is fitted onto the terminal-equipped ropes and is fixed with stainless steel clips so as to ensure it is sealed against the pressure of the cooling water flowing inside the cable.

The main drawback to using "rope lay" cables is that the intense electromagnetic fields cause oscillations and shocks that reduce the average lifetime of the cables themselves.

### Disclosure of the Invention

The aim of the present invention is therefore to remove the abovementioned drawbacks.

The invention, as characterised in the independent claims, achieves the aim by applying, by extrusion, a covering sheath of uniform thickness onto all ropes making up the cable, which is subsequently pierced. Further developments of the invention are the subject of the dependent claims. The problem to be solved is how to make piercings onto a filled covering without damaging the copper.

The main advantage obtained by the present invention is essentially that the new covering keeps the copper rope more compact, limiting its ability to move and reducing wearing caused by rubbing between its constituent copper wires: this leads cables to have a much longer life expectancy.

Indeed, since all the ropes inside the cable are covered by the sheath, there is a greater resistance to friction among the ropes themselves, thus limiting any abrasions between them and considerably extending the lifetime of the ropes that make up the cables.

Furthermore, by being covered in this way, the rope is more rigid and consequently has a much higher bending strength. Thereafter, the average lifetime of the cables is further extended, firstly because the rope covering has the advantage of distributing electrodynamic forces more uniformly on the rope itself, thus considerably reducing mechanical stress at the typical points of failure identified in the area of the terminals, and secondly because the increased bending resistance counters the forces caused by the electromagnetic fields, thus leading to a reduction in the oscillation and shocks between cables, while maintaining the same current.

Finally, the process of uniform mechanical pressing on the entire surface of the terminals ensures a better seal.

### Brief Description of the Drawings

Further advantages and features of the invention will become more apparent from the detailed description below with reference to the accompanying drawings, which show a non-limiting embodiment, in which:
- Figure 1 shows the invention according to a perspective view during the making process;
- Figure 2 shows the invention according to a perspective view once made, with some parts removed to better highlight others;
- Figure 3 shows a detail for the making process.

### Detailed Description of Preferred Embodiment of the Invention

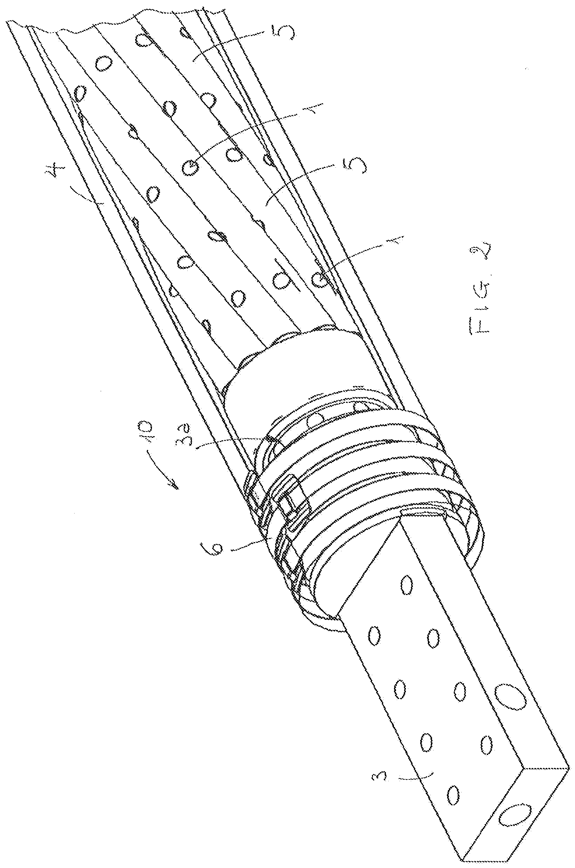

As shown in Figure 2, the invention relates to a water-cooled electric cable, comprising a plurality of copper ropes (1) wound on a central support (2), often formed by a hollow tube, electric terminals (3) at the ends constrained to the ropes (1) and an outer tube (4) fixed in a sealed way with clips (6), in which each rope (1) is covered by a sheath (5), which is extrusion cast in plastic or rubber material on the copper rope (1) itself, and subsequently pierced.

The process for making such a water-cooled electric cable (10) comprises a preliminary step of forming a plurality of copper ropes (1) constituted of copper wires, followed by a step consisting of the extrusion of plastic or rubber material on each rope (1) in such a way as to form an outer sheath (5) on each rope (1), which completely covers the rope (1). The sheath (5) is then pierced and the ropes (1), thus covered, and which can even measure tens of meters, are subsequently cut into pieces having a predetermined length according to the size characteristics of the installation for which the cables are destined.

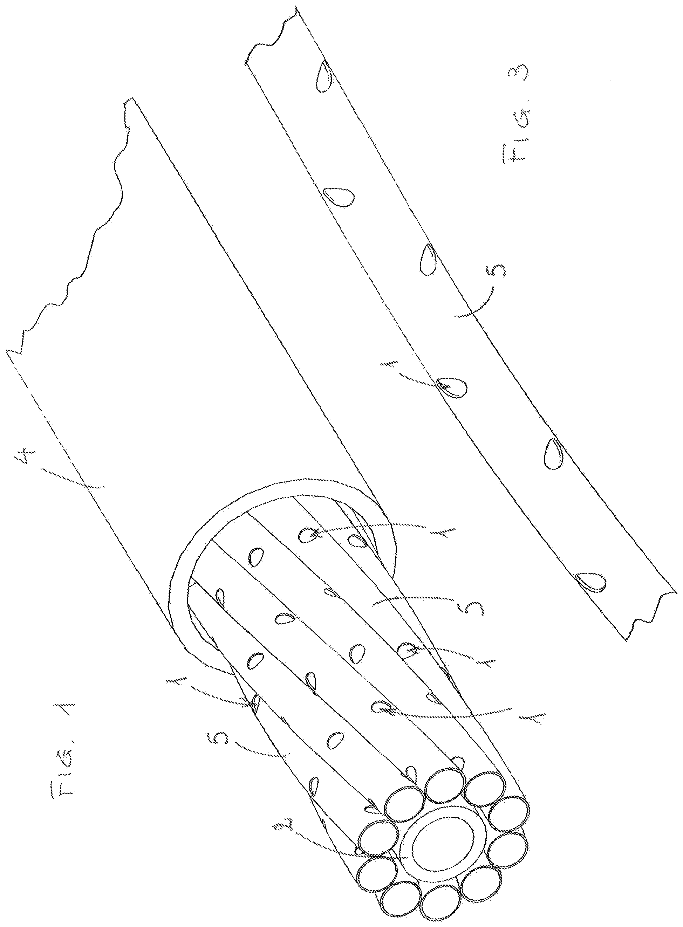

The piercing of the sheath (5) can also be carried out by several methods. The solution that is most preferable today involves removing portions of the sheath (5) by cutting it with pressurised water, as shown in Figure 3: the pressures involved can reach values of around 3000 bar and, although the cost of this procedure is quite significant, the cut is very well defined and the underlying copper is not ruined; moreover, the speed of the operation allows this operation to be carried out on line.

Alternative solutions can involve the use of laser cutting and die cutting. In the first case, despite a high-quality cut, the operation has the disadvantage of being slow, which forces it to be carried out off of the production line; in the second case, on the other hand, the speed of cutting is contrasted by a difficulty in removing the waste material and the fact that the copper that makes up the rope (1) is more easily damaged.

To avoid this drawback, before laying the plastic or rubber material onto the copper ropes (1), a polymeric film, for instance made of polyester, and a few microns thick, is applied over the ropes (1).

The ropes (1) are then assembled on the central support (2) in a spiral arrangement, as shown in Figure 1, and the electrical terminals (3) are fixed to the ends of the ropes (1): the fixing of the electrical terminals (3) to the ends of the ropes (1) can be done by braze welding or mechanical pressing. In the latter case, it is advantageous for the mechanical pressing to be performed simultaneously and uniformly on the entire cylindrical surface (3a) of the electric terminal (3).

Finally, the set of ropes (1) and terminals (3) is threaded into an outer tube (4) and then clipped to seal.

## Claims

1. A water-cooled electric cable, comprising a plurality of copper ropes (1) wound on a central support (2), electric terminals (3) at the ends constrained to the ropes (1) and an outer tube (4) fixed in a sealed way, a plurality of sheaths (5), one for each rope (1), which are extrusion cast in plastic or rubber material on each copper rope (1) and subsequently pierced at a plurality of intervals along the length of the cable, said cable being **characterised in that** it comprises a polymeric film between the ropes (1) and the sheaths (5).

2. A process for making a water-cooled electric cable, comprising a preliminary step of forming a plurality of copper ropes (1) constituted of copper wires, **characterised in that** it comprises in sequence the following steps:
- laying a polymeric film, such as a polyester film, over the copper ropes (1);
- extrusion of plastic or rubber material on each rope (1) in such a way as to form an outer sheath (5) on each rope (1), which completely covers the rope (1);
- piercing the outer sheath (5) at a plurality of intervals along its length;
- assembling the ropes (1) on a central support (2);
- fixing electric terminals (3) to the ends of the ropes (1);
- threading the ropes (1) and terminals (3) into an outer tube (4);
- clipping the outer tube (4) to seal it.

3. The process according to claim 2, **characterised in that** the sheath (5) is pierced by cutting it with pressurised water.

4. The process according to claim 2, **characterised in that** the sheath (5) is pierced by laser cutting.

5. The process according to claim 2, **characterised in that** the sheath (5) is pierced by die cutting.

6. The process according to claim 2, **characterised in that** it comprises a step of cutting the ropes (1) into pieces having a predetermined length, interposed between the steps of piercing the sheath (5) and assembling the ropes (1) on a central support (2).

7. The process according to claim 2, **characterised in that** the fixing of the electric terminals (3) to the ends of the ropes (1) is performed with a process of simultaneous and uniform mechanical pressing on the entire cylindrical surface (3a) of the electric terminal (3).

## Patentansprüche

1. Ein wassergekühltes elektrisches Kabel, eine Mehrzahl von Kupfersträngen (1), die um einen zentralen Träger (2) gewunden sind, an den Enden elektrische Anschlussstücke (3), die an den Strängen (1) befestigt sind, und einen Außenschlauch (4), der in versiegelter Art befestigt ist, eine Mehrzahl von Ummantelungen (5), eine für jeden Strang (1), die aus Kunststoff oder Gummimaterial auf jedem Kupferstrang (1) extrudiert sind und in der Folge in einer Mehrzahl von Abständen über die Länge des Kabels hinweg durchbohrt sind, beinhaltend, besagtes Kabel ist dabei **dadurch gekennzeichnet, dass** es eine Polymerfolie zwischen den Strängen (1) und den Ummantelungen (5) beinhaltet.

2. Ein Verfahren zur Herstellung eines wassergekühlten elektrischen Kabels, einen Vorbereitungsschritt der Bildung einer Mehrzahl von Kupfersträngen (1), die aus Kupferdrähten bestehen, beinhaltend, **dadurch gekennzeichnet, dass** es in der Reihenfolge folgende Schritte beinhaltet:
- eine Polymerfolie, wie etwa eine Polyesterfolie, über die Kupferstränge (1) zu legen;
- Kunststoff oder Gummimaterial auf jeden Strang (1) zu extrudieren, solcherart, dass an jedem Strang (1) eine äußere Ummantelung (5) gebildet wird, die den Strang (1) vollständig bedeckt;
- die äußere Ummantelung (5) in einer Mehrzahl von Abständen über ihre Länge hinweg zu durchbohren;
- die Stränge (1) an einem zentralen Träger (2) zusammenzuführen;
- elektrische Abschlussstücke (3) an den Enden der Stränge (1) zu befestigen;
- die Stränge (1) und Abschlussstücke (3) in einen äußeren Schlauch (4) einzufädeln;
- den äußeren Schlauch (4) abzuklemmen, um ihn zu versiegeln.

3. Das Verfahren nach dem Patentanspruch 2, **dadurch gekennzeichnet, dass** die Ummantelung (5) durchbohrt wird, indem sie mit unter Druck stehendem Wasser geschnitten wird.

4. Das Verfahren nach dem Patentanspruch 2, **dadurch gekennzeichnet, dass** die Ummantelung (5) durch Laserschneiden durchbohrt wird.

5. Das Verfahren nach dem Patentanspruch 2, **dadurch gekennzeichnet, dass** die Ummantelung (5) durch Stanzen durchbohrt wird.

6. Das Verfahren nach dem Patentanspruch 2, **dadurch gekennzeichnet, dass** es einen Schritt des Schneidens der Stränge (1) in Teile, die eine vorher festgelegte Länge haben, beinhaltet, der zwischen den Schritten des Durchbohrens der Ummantelung (5) und des Zusammenführens der Stränge (1) an einem zentralen Träger (2) erfolgt.

7. Das Verfahren nach dem Patentanspruch 2, **dadurch gekennzeichnet, dass** das Befestigen der elektrischen Anschlussstücke (3) an den Enden der Stränge (1) anhand eines Verfahrens der Ausübung eines gleichzeitig und gleichmäßig erfolgenden mechanischen Drucks auf die gesamte zylindrische Oberfläche (3a) des elektrischen Anschlussstücks (3) durchgeführt wird.

## Revendications

1. Un câble électrique refroidi à l'eau, comprenant une pluralité de cordes (1) de cuivre enroulées sur un support central (2), des bornes électriques (3) aux extrémités assujetties aux cordes (1) et un tube (4) externe fixé de façon étanche, une pluralité de gaines (5), une pour chaque corde (1), qui sont coulées par extrusion de matériau plastique ou caoutchouc sur chaque corde (1) de cuivre et sont ensuite perforées au niveau d'une pluralité d'intervalles le long de la longueur du câble, ledit câble étant **caractérisé en ce qu'**il comprend un film polymère entre les cordes (1) et les gaines (5).

2. Un procédé de fabrication d'un câble électrique refroidi à l'eau, comprenant une étape préliminaire de formation d'une pluralité de cordes (1) de cuivre constituées de fils de cuivre, **caractérisé en ce qu'**il comprend en séquence les étapes suivantes :
- étaler un film polymère, tel qu'un film polyester, sur les cordes (1) de cuivre ;
- extruder un matériau plastique ou caoutchouc sur chaque corde (1) de manière à former une gaine (5) externe sur chaque corde (1), qui recouvre complètement la corde (1) ;
- perforer la gaine (5) externe au niveau d'une pluralité d'intervalles le long de sa longueur ;
- assembler les cordes (1) sur un support central (2) ;
- fixer des bornes électriques (3) aux extrémités des cordes (1) ;
- faire passer les cordes (1) et les bornes (3) dans un tube (4) externe ;
- pincer le tube (4) externe pour le sceller.

3. Le procédé selon la revendication 2, **caractérisé en ce que** la gaine (5) est perforée par découpe à eau sous pression.

4. Le procédé selon la revendication 2, **caractérisé en ce que** la gaine (5) est perforée par découpe laser.

5. Le procédé selon la revendication 2, **caractérisé en ce que** la gaine (5) est perforée par découpe à l'emporte-pièce.

6. Le procédé selon la revendication 2, **caractérisé en ce qu'**il comprend une étape de coupe des cordes (1) en morceaux ayant une longueur prédéfinie, interposée entre les étapes de perforation de la gaine (5) et d'assemblage des cordes (1) sur un support central (2).

7. Le procédé selon la revendication 2, **caractérisé en ce que** la fixation des bornes électriques (3) aux extrémités des cordes (1) est effectuée par un processus de pressage mécanique simultané et uniforme sur toute la surface cylindrique (3a) de la borne électrique (3).
